# EUROPEAN PATENT APPLICATION

(11) **EP 1 612 538 A1**
(43) Date of publication of application: **04.01.2006**
(21) Application number: 04722440.7
(22) Date of filing: 22.03.2004
(51) Int. Cl.: G01N 15/02, G06T 7/00, G01N 33/483

(54) **ANALYSIS DEVICE AND METHOD FOR CELL COUNT IN THE ANALYSIS DEVICE**

(30) Priority: 24.03.2003 JP 2003080295; 22.04.2003 JP 2003116411; 27.10.2003 JP 2003365383
(71) Applicant: MATSUSHITA ELECTRIC INDUSTRIAL CO., LTD., Kadoma-shi, Osaka 571-8501 (JP)
(72) Inventor: YAMADA, Ryosuke, Ehme 791-0301 (JP); HYOUDOU, Masatake, Ehime 791-1113 (JP); FUJII, Yoshiyuki, Ehime 791-0245 (JP)
(74) Representative: Grünecker, Kinkeldey, Stockmair & Schwanhäusser Anwaltssozietät
(86) International application number: PCT/JP2004/003894
(87) International publication number: WO 2004/086005

(57) **Abstract**

The movement of a window can be optimally controlled by storing, in window memory, information indicating a movement made by a distance corresponding to a window size, thereby preventing duplicate detection of the same cell and eliminating the need for recapturing data every time the window size is changed. Thus, it is possible to provide a cell analysis apparatus which can obtain the number of desired cells with one data acquisition and conduct an accurate analysis in a short time.

## Description

### Technical Field

The present invention belongs to a cell analysis technique in the field of medical equipment and relates to an analysis apparatus, in which a specimen containing different sized cells is applied onto a disc, light is emitted to the disc, and the sizes of the cells are identified and the cells are counted in the specimen based on reflected light or transmitted light, and relates to a cell counting method in the analysis apparatus.

### Background Art

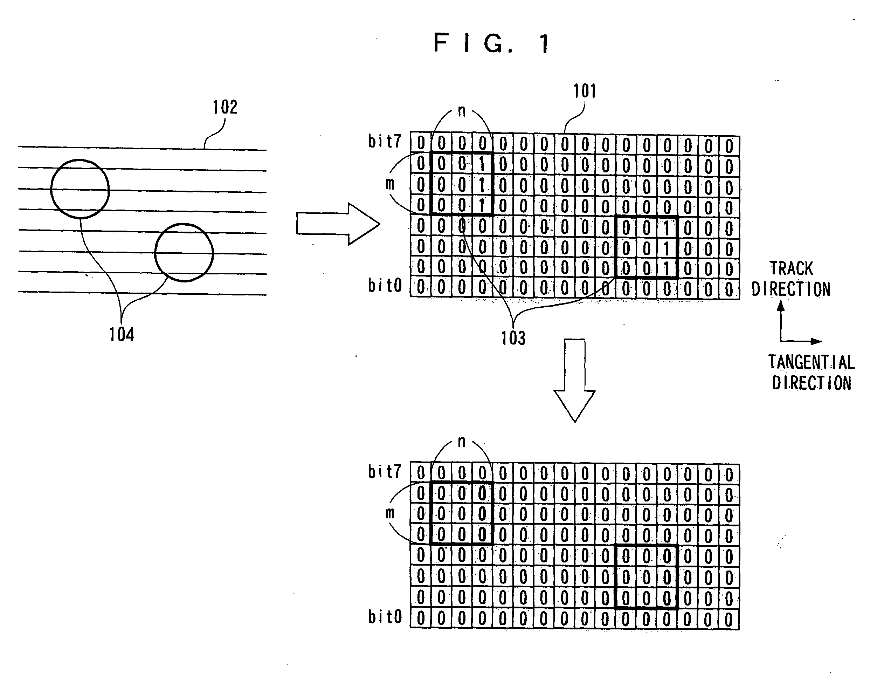

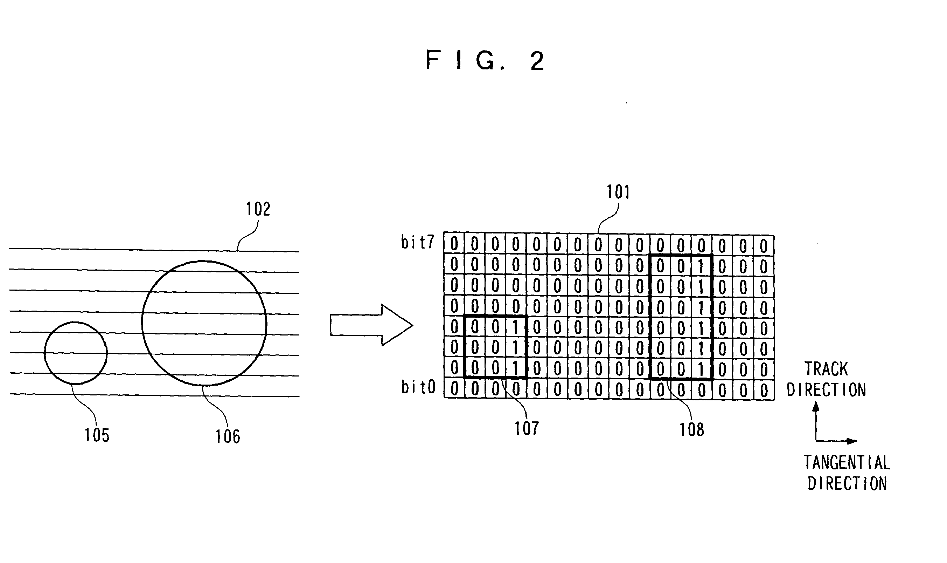

As prior art 1 of an analysis apparatus for identifying the size of a cell and counting cells in a specimen, an analysis apparatus using an optical disc is used in the field of medical equipment. In this analysis apparatus, a light source emits light to a specimen applied on a disc while tracing the tracks of the disc, and a detector detects reflected light or transmitted light. A detected signal passes through an AD converter and is stored in a buffer memory. The disc has a calibration mark indicating the reference rotation direction, and data detected by the detector is aligned relative to the calibration mark. In a location having no cells in the specimen, the detector detects a constant intensity of light, whereas in a location having cells, the level of light detected by the detector is reduced due to the interference of light. Such a change in the level detected by the detector is recognized to decide the presence or absence of a cell. With this method, the presence or absence of cells is decided in a one-dimensional manner (on a track). Referring to FIGS. 1 and 2, a method of identifying cells in a two-dimensional manner will be discussed below.

FIG. 1 is a diagram for explaining an analysis method of the conventional analysis apparatus. FIG. 2 is a diagram for explaining a method of analyzing different sized cells in the conventional analysis apparatus.

First, the presence or absence of cells is decided in a one-dimensional manner. When it is decided that cells are present, '1' is stored in memory for each cell. When it is decided that no cell is present, '0' is stored in the memory at regular sampling intervals. FIG. 1 shows a state in the memory at this point of time. One-dimensional cell recognition data on cells 104 on tracks 102 of a disc is stored while each of the tracks 102 is matched with each bit of data buses on specimen memory 101. At this point, windows 103 of m rows × n columns corresponding to the size of the cell 104 are placed on the specimen memory 101. Scanning is performed on the memory 101 while shifting the windows 103 by one bit in the tangential direction and the track direction. During scanning, when '1' is present in all the rows of the window 103, it is two-dimensionally decided that a cell is present. Atthispoint, "1" in the window are all rewritten to "0" and processing is performed to prevent duplicate detection of the same cell. In this case, the size of a cell to be detected is determined by a window size. When the size of a cell to be detected is changed, the size of the window 103 is changed accordingly.

As prior art 2 of an analysis apparatus, a conventional cell counting method will be discussed below in accordance with the accompanying drawings. In this method, cells within a fixed size are counted for each size out of different sized cells applied on an analysis disc.

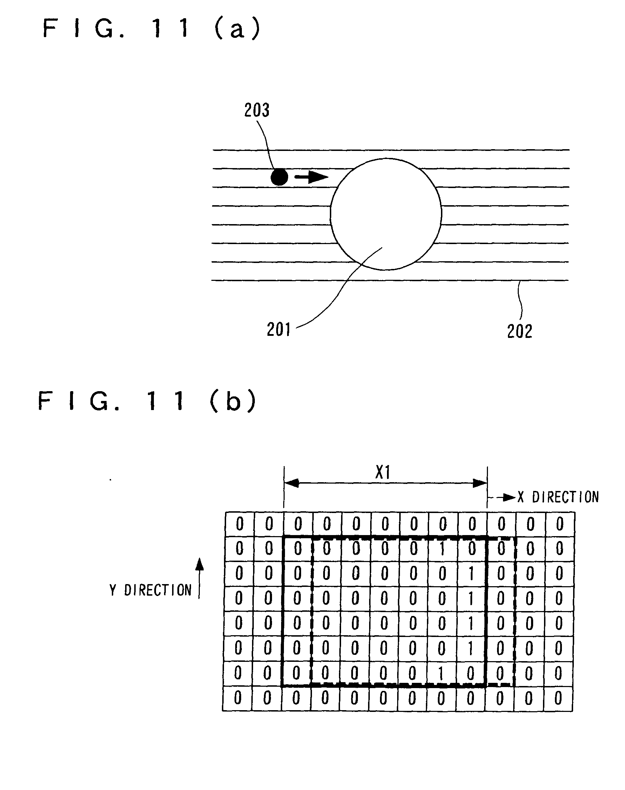

FIGS. 11(a) and 11(b) are each an explanatory drawing showing a cell detecting method in the conventional cell counting method. FIG. 11(a) is an explanatory drawing showing the positional relationship among tracks, laser light, and a cell to be measured on the analysis disc in the conventional cell counting method. FIG. 11(b) is an explanatory drawing showing a method of identifying the size of a cell and counting cells for each size by using a window in the conventional cell counting method.

In FIG. 11 (a), reference numeral 201 denotes a cell which is a measuring object applied on the analysis disc, reference numeral 202 denotes tracks on the analysis disc, and reference numeral 203 denotes laser light moving relatively on the analysis disc. In the conventional analysis apparatus, a specimen is applied to the analysis disc and the number of specific cells is analyzed out of the different sized cells 201 in the specimen. In such an analysis apparatus, the tracks 202 are spirally formed on the analysis disc in the same manner as an optical disc such as a CD-ROM. Control is performed such that the laser light 203 moves relatively on the tracks 202 during the rotation of the analysis disc.

The cell 201 to be measured is larger than the width of the track 202 and present over the two or more tracks 202. When the laser light 203 moves on the tracks 202, a signal change occurs in a laser light receiving section depending upon whether the cell 201 is present or not on the tracks 202. By processing the signal change, "1" is stored in memory when it is decided that the cell 201 is present and "0" is stored otherwise, and the length of "1" is detected in the longitudinal direction based on the data array in the memory, so that the sizes of two or more cells are identified and the cells are counted for each size.

As the cell counting method of identifying the size of a cell and counting cells for each size, the following method is used: cells to be measured are detected and counted for each size by using square windows, which are switched for each desired size.

In such a cell counting method, for example, when the number of cells with a size of six tracks is detected from a plurality of cells with a size of one to eleven tracks, a window with a size of 6 × X1 is used as shown in FIG. 11 (b). Scanning is performed while shifting the window one by one in the X direction, and the number of locations where "1" is included in all the rows of the window is counted.

Then, a window with a size of 7 × X1 is used. Scanning is performed while shifting the window one by one in the X direction, and the number of locations where "1" is included in all the rows of the window is counted.

Hence, the number of cells present over six tracks or more and the number of cells present over seven tracks or more are determined, so that the number of cells with a size of six tracks can be determined by a difference between the numbers.

In this case, X1 is an integer value larger than the range of displacement of "1". The displacement is caused by uneven rotation of the disc or variations in signal detection. Even in the event of displacement of "1" on each track, the displacement can be detected as "1" of the same cell.

Prior art 3 of the analysis apparatus conforms to a dot image identifying method in which an isolated point detection filter FD is used for image data to detect an isolated point, it is decided whether the image data is a dot image depending upon the number of isolated points detected in a predetermined area, and a decision result is outputted. Window scan is performed in memory to handle the image data.

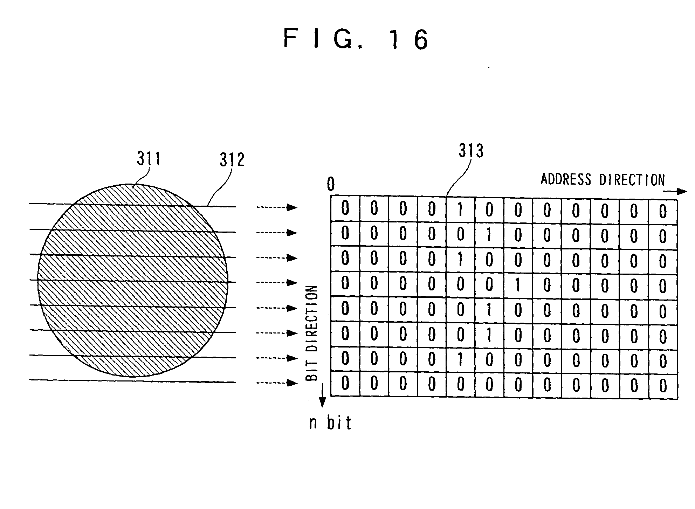

FIG. 16 shows a method of storing data in memory when recognizing a cell. In FIG. 16, data on a cell 311 to be measured is captured for each track 312 of a disc. The binarized data is matched with the bit of a data bus and is stored in a memory area 313 in the order of sampling. In this case, "1" is stored when a cell is recognized on the passed track 312, and "0" is stored otherwise.

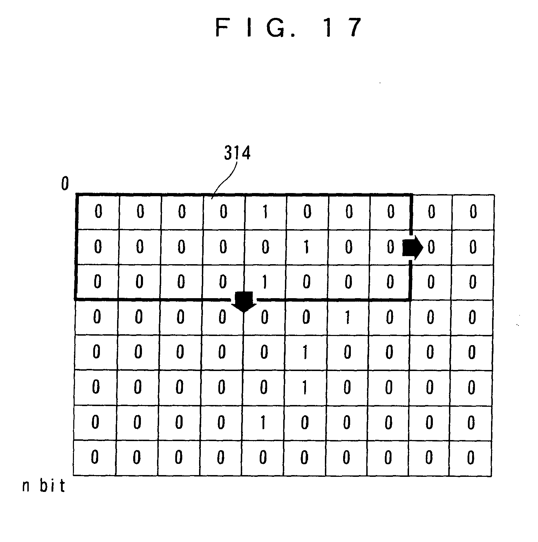

As shown in FIG. 17, in the cell size identifying method and counting method at this point, a window 314 with a fixed size of a × b (e.g., 3 × 8 in FIG. 17) is caused to scan the memory where cell data is stored in the above manner. In this case, "a" indicates that a cell to be measured has a size of about "a" tracks, and "b" is determined based on a fact that a search can be made in consecutive "b" samples for cell recognition data "1" of the same cell even when a sampling position in the track is displaced by jitter. Further, in the scanning method, the window is shifted by one sample in the address direction and shifted downward by one bit in the bit direction. When "1" is found in consecutive "a" bits in the bit direction in the window, "1" in "a" bits are counted as a single cell, "1" in the window are all replaced with "0", and these operation are repeated.

In the foregoing prior art 1, in the case where a specimen includes, as shown in FIG. 2, both of a cell 105 to be detected and a cell 106 which is double in size of cell 105 and should not be detected, when the specimen memory 101 is scanned with a window 107 matching with the size of the cell 105 to be detected, the cell 106 not to be detected is counted as the two cells 105 to be detected. For example, when the number of the cells 105 to be detected is 100 and the number of cells 106 not to be detected is 50, a result of 100 + 50 × 2 = 200 is obtained by detection with the window 107.

In order to obtain the number of the cells 105 to be detected, it is necessary to obtain the number of the cells 106 not to be detected and subtract the number of the cells 106 from the total. For this purpose, scanning is performed in the specimen memory 101 by using a window 108 matching with the size of the cell 106 not to be detected. However, data in the specimen memory 101 is rewritten after scanning using the window 107, and thus the data cannot be used. Hence, data has to be recaptured, which causes different analysis conditions as well as doubled analysis time, so that an analysis error may increase.

In the measuring method of the cell counting method of prior art 2, when X1 is large and the displacement of "1" is small in each track during the movement of the window after counting, a detected array may be read again.

For example, when a cell with a size of six tracks is detected, a detected cell with a size of seven or more tracks is detected again in the window scan of the subsequent row.

In the conventional cell counting method, "1" is converted to "0" in a location having been detected by the window and counted once, so that the location is not read as "1" again. Thus, when a window size is switched for detection, it is necessary to make remeasurements through window scan on all the rows to decide whether a track has a cell or not, requiring long measuring time.

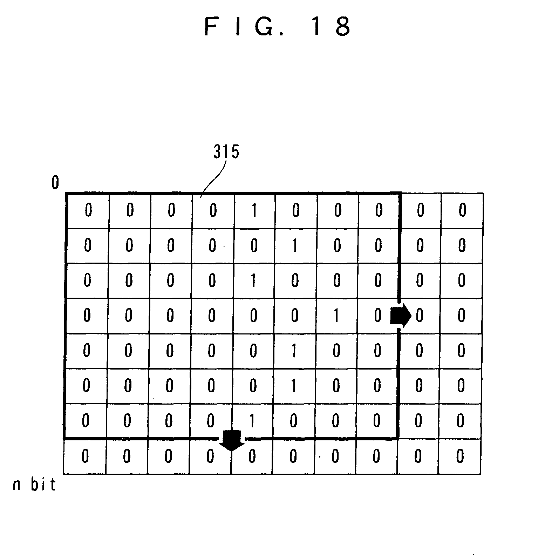

In the method of prior art 3, the window 314 with a fixed target cell size is used and the memory is rewritten to "0" every time a cell is detected. Thus, a large cell requires a window size change 315 as shown in FIG. 18. In this case, the memory cannot be reused and thus recapturing is necessary. For this reason, measuring conditions become different, a counting error may increase, and long measuring time is necessary.

An obj ect of the present invention is to provide an analysis apparatus which can eliminate the need for two or more measurements to decide the presence or absence of a cell on tracks, accurately identify the size of a cell and count cells in a short time with one data acquisition, improve the accuracy of counting desired cells, and shorten measuring time, and provide a cell counting method in the analysis apparatus.

### Disclosure of the Invention

An analysis apparatus according to the first aspect of the present invention, in which a specimen containing cells is applied onto a disc, light is emitted to the disc, and the number of cells is determined based on reflected or transmitted light, the analysis apparatus comprising: a one-dimensional cell recognition section for one-dimensionally recognizing the cell based on a change of the reflected or transmitted light, a specimen memory for storing first data in a bit corresponding to each track of the disc based on the recognition result of the one-dimensional cell recognition section, the first data indicating the presence or absence of the cell, a two-dimensional cell recognition section for two-dimensionally recognizing a cell by scanning the specimen memory with a window having a given size to confirm the first data, a data addition section for adding second data to the specimen memory for each window, the second data indicating the presence or absence of the cell in the two-dimensional cell recognition, a cell size identification section for identifying a cell size by using the second data, and a window movement control section for controlling the movement of the window, wherein the second data indicating the presence or absence of the cell for each window is added to the specimen memory, so that a cell size and the number of cells are obtained with one data acquisition.

An analysis apparatus according to the second aspect of the present invention, in which a specimen containing cells is applied onto a disc, light is emitted to the disc, and the number of cells is determined based on reflected or transmitted light, the analysis apparatus comprising: a one-dimensional cell recognition section for one-dimensionally recognizing the cell based on a change of the reflected or transmitted light, a specimen memory for storing first data in a bit corresponding to each track of the disc based on the recognition result of the one-dimensional cell recognition section, the first data indicating the presence or absence of the cell, a two-dimensional cell recognition section for two-dimensionally recognizing the cell by scanning the specimen memory with a window having a given size to confirm the first data, a window switching section for arbitrarily switching the size of the window during scanning of the specimen memory, a cell size identification section for identifying a cell size recognized from a scanning result obtained with one or more window sizes in the two-dimensional cell recognition section, and a data deletion section for deleting the first data after the identification in the cell size identification, wherein when a cell is confirmed during scanning of the specimen memory, a cell size is identified by changing the window size and performing rescanning, so that a cell size and the number of cells are obtained with one data acquisition.

An analysis apparatus according to the third aspect of the present invention is the analysis apparatus according to the first or second aspect, wherein a sampling period can be changed with the size of the cell in the specimen. An analysis apparatus according to the fourth aspect of the present invention is the analysis apparatus according to the first aspect, further comprising a cell spacing memory for storing a spacing between the cells during scanning of the specimen memory with the window, and a memory skip control section for scanning only an area having the cell based on information from the cell spacing memory when the window size is switched to rescan the specimen memory.

With this configuration, it is possible to obtain the number of desired cells with one data acquisition and conduct an accurate analysis in a short time.

A cell counting method in an analysis apparatus according to the fifth aspect of the present invention, the method comprising: reading a data array in the area of a scanning window from memory for storing the data array having binary data of "0" or "1" surface-aligned along a lateral direction X and a longitudinal direction Y, the binary data being obtained based on the presence or absence of cells applied with two or more sizes on an analysis disc, the scanning window movable in the lateral direction X and the longitudinal direction Y and having a size expressed by rows × X, the rows being aligned along the X direction of the data array, performing an operation based on the data to decide the presence or absence of the cells, identifying cell sizes, and counting the number of the cells for each of the cell sizes, wherein the scanning window is constituted of a first window for deciding whether "0" is present over the area of the first window with a size of 1 × X1 (X1 is an integer constant), a second window for deciding whether "1" is included in the area of the second window positioned with a size of 1 × 1 at the center of the X direction of the first window in the subsequent row of the first window, and a third window for deciding whether at least one "1" is included in each row of the area of the third window positioned with a size of Y × X1 (Y is an integer variable) in the subsequent row of the second window, and the cell sizes are identified using the scanning window.

With this method, when the data array is scanned and read with the scanning window, it is decided in the second window whether "1" is present in the area with the size of rows × X = 1 × 1, and thus a decision is not made on data of the same location. Hence, it is possible to identify the size of a cell on tracks and count the number of cells for each size without duplicate decision of the same data.

A cell counting method in an analysis apparatus according to the sixth aspect of the present invention is the cell counting method in the analysis apparatus of the fifth aspect, wherein X1 is larger than the range of displacement caused by variations in a sampling starting point.

With this method, in the first window and the third window, X1 larger than the range of displacement is used as X to decide data, and thus the position of "1" can be detected even when the sampling starting point is displaced.

A cell counting method in an analysis apparatus according to the seventh aspect of the present invention is the cell counting method in the analysis apparatus of the fifith or sixth aspect, wherein the size of a cell to be detected is set at Y2 to Y3 (Y2 and Y3 are integers, Y2 < Y3), the reading of the data array in the area of the scanning window is started with the scanning window where Y = Y2 - 1 is established, Y is changed, when there is a match with the condition of the scanning window, successively to Y2, Y2 +1, ... on a position where there is the match and it is decided whether there is a match with the range condition of Y, and the data array in the area is read until there is no match or Y = Y3 is obtained.

With this method, in the third window, it is not necessary to read a vacant range when the scanning window is switched, thereby shortening detection time.

A cell counting method in an analysis apparatus according to the eighth aspect of the present invention is the cell counting method in the analysis apparatus according to any one of the fifth to seventh aspects, wherein the presence or absence of the cell is decided according to a change in light quantity when laser light is emitted to tracks on the analysis disc where the cell is applied and when the laser light is received by a photodetector.

With this method, the presence or absence of a cell on tracks is decided only by a change in light quantity when laser light is received by the photodetector. Thus, when there is a cell on tracks, only one "1" is stored in the memory, thereby avoiding complicated data processing when two or more "1" are present for one cell.

A cell counting method in an analysis apparatus according to the ninth aspect of the present invention, the method comprising: reading a data array in the area of a scanning window from memory for storing the data array having binary data of "0" or "1" surface-aligned along a lateral direction X and a longitudinal direction Y, the binary data being obtained based on the presence or absence of cells applied with two or more sizes on an analysis disc, the scanning window movable in the lateral direction X and the longitudinal direction Y and having a size expressed by rows × X, the rows being aligned along the X direction of the data array, deciding the presence or absence of the cells based on the data, identifying the sizes of the cells, and counting the number of the cells for each cell size, wherein the scanning window is constituted of a first window for deciding whether "0" is present over the area of the first window with a size of 1 × X1 (X1 is an integer constant), a second window for deciding whether "1" is included in the area of the second window positioned with a size of 1 × 1 at the center of the X direction of the first window in the subsequent row of the first window, a third window for deciding whether at least one "1" is included in each row of the area of the third window positioned with a size of Y1 × X1 (Y1 is an integer variable) in the subsequent row of the second window, and a fourth window for deciding whether "0" is present over the area of the fourth window positioned with a size of 1 × X1 (X1 is an integer variable) in the subsequent row of the third window, and the cell size is identified using the scanning window.

With this method, when the data array is scanned and read with the scanning window, the second window decides whether "1" is present in the area of rows × X = 1 × 1, so that a decision is not made on data of the same location. Thus, it is possible to identify a cell size and count the number of cells for each size with one window scan without duplicate decision of the same data.

A cell counting method in an analysis apparatus according to the tenth aspect of the present invention is the cell counting method in the analysis apparatus according to the ninth aspect, wherein X1 is larger than the range of displacement caused by variations in a sampling starting point.

With this method, in the first window and the third window, X1 larger than the range of displacement is used as X to decide data, and thus the position of "1" can be detected even when the sampling starting point is displaced.

A cell counting method in an analysis apparatus according to the eleventh aspect of the present invention is the cell counting method in the analysis apparatus of the ninth or tenth aspect, wherein the presence or absence of the cell is decided according to a change in light quantity when laser light is emitted to tracks on the analysis disc where the cell is applied and when the laser light is received by a photodetector.

With this method, the presence or absence of a cell on tracks is decided only by a change in light quantity when laser light is received by the photodetector. Thus, when there is a cell on tracks, only one "1" is stored in the memory, thereby avoiding complicated data processing when two or more "1" are present for one cell.

An analysis apparatus according to the twelfth aspect of the present invention, in which detection light is emitted to an analysis disc where cells are applied, and the cells are counted based on data received by a photodetector, the analysis apparatus comprising: memory for storing binary cell information for each bit of a data bus, the cell information being obtained for each track on the analysis disc, a window movable in the area of the memory, a window movement control section for controlling the movement of the window, a cell size determination section for recognizing the cell from the array of "1" in the window and determining a cell size, a cell counting section for incrementing a counter after the recognition of the cell, and a memory rewriting section for rewriting "1" to "0" after the recognition of the cell.

With this configuration, only one window can is necessary for identifying a cell size and counting cells, and thus it is possible to recognize all the cells under the same conditions, achieve higher accuracy of counting and shorter measuring time, and eliminate the need for a change in window size for recognizing a large cell. Hence, it is not necessary to reuse the memory and it is possible to identify a cell size and count cells with one capture and one scan in the memory.

An analysis apparatus according to the thirtieth aspect of the present invention is the analysis apparatus according to the twelfth aspect, wherein the window movement control section comprises a window scanning section for causing a window with a size of 1 × 1 to scan in the address direction, a "1" decision section for deciding the presence or absence of "1" during scanning of the window, a cell size counter for incrementing a count every time the decision section detects "1", a window control section for expanding the window to "1" detected by the decision section, a stage shifting section for shifting a scanning segment of "1" in the bit direction every time the decision section detects "1", and a search segment control section for limiting a range where the window is caused to scan in the shifted scanning segment.

With this configuration, "1" is detected first and the window is sequentially expanded to the "1" in the bit direction, and thus it is possible to determine a window size for one cell, that is, the size of a cell in the track direction and eliminate the need for a change in window size for recognizing a large cell. Hence, it is not necessary to reuse the memory and it is possible to identify a cell size and count cells with one capture and one scan in the memory.

An analysis apparatus according to the fortieth aspect of the present invention is the analysis apparatus according to the twelfth or thirtieth aspect, wherein a size expanded in the address direction is determined based on a desired cell size and the obtained size is used as a search segment of the subsequent bit.

With this configuration, a search is made through only a specific range from the firstly detected "1", thereby preventing another cell from being erroneously recognized as the same cell and eliminating a change in window size for recognizing a large cell. Hence, it is not necessary to reuse the memory and it is possible to identify a cell size and count cells with one capture and one scan in the memory.

A cell counting method in an analysis apparatus according to the fiftieth aspect of the present invention, in which detection light is emitted to an analysis disc where cells are applied, and the cells are counted based on data received by a photodetector, the method comprising step 1 of causing a window with a size of 1 × 1 to scan in the address direction and detecting "1" in a memory area, step 2 of expanding the window to 1 × X6 (X6 is an integer constant) relative to the detected "1", step 3 of disposing the window of 1 × X6 in the subsequent stage and expanding, when the window has "1", the window to the subsequent stage, step 4 of repeating the processing of step 2 and step 3 until no "1" is detected in the window, step 5 of ending the expansion of the window when no "1" is detected in the window, and making a count when the window has a size of a predetermined value in the Y direction, and step 6 of rewriting all "1" to "0" and repeating the processing from step 1.

With this method, it is not necessary to remeasure a cell on tracks two or more times to confirm the presence of the cell, thereby accurately identifying a cell size and counting cells in a short time with one data acquisition.

As described above, according to the present invention, the movement amount of the window is optimized to prevent duplicate scan of the same bit during scanning. Thus, even in the presence of different sized cells, it is possible to obtain the number of desired cells with one data acquisition and conduct an accurate analysis in a short time.

A cell size can be identified by adding a cell recognition result to the specimen memory for each of the scanning window. Thus, even in the presence of different sized cells, it is possible to obtain the number of desired cells with one data acquisition and conduct an accurate analysis in a short time.

A cell size can be identified by freely changing a window size during scanning. Thus, even in the presence of different sized cells, it is possible to obtain the number of desired cells with one data acquisition and conduct an accurate analysis in a short time.

With the decision window for detecting 0 in the first row of the scanning window and the 1 × 1 decision window for detecting 1 in the second row of the scanning window, the start position of data can be positively detected relative to a cell on tracks. Thus, without the need for deleting data in the window, a cell size can be identified and cells are counted without duplicate decision of the same data.

Thus, it is not necessary to remeasure a cell on tracks two or more times to confirm the presence of the cell, thereby accurately identifying a cell size and counting cells in a short time.

Further, it is not necessary to change a window size for recognizing a large cell, and thus the reuse of the memory is also unnecessary. Thus, it is possible to identify a cell size and count cells with one capture and one scan in the memory.

A number of cells can be counted with one scan in the memory, thereby achieving higher accuracy of counting and shorter measuring time.

Since a cell size can be accurately identified, it is possible to recognize the number of cells for each size and display an image and so on without cells of undesired sizes.

### Brief Description of the Drawings

FIG. 1 is a diagram for explaining an analysis method of a conventional analysis apparatus;
FIG. 2 is a diagram for explaining a method of analyzing different-sized cells in the conventional analysis apparatus;
FIG. 3 is a block diagram showing an analysis apparatus according to Embodiment 1 of the present invention;
FIG. 4 is a diagram showing a scanning procedure of a window according to the present invention;
FIG. 5 is a block diagram showing an analysis apparatus according to Embodiment 2 of the present invention;
FIG. 6 is a block diagram showing an analysis apparatus according to Embodiment 3 of the present invention;
FIGS. 7(a) and 7(b) are each an explanatory drawing showing a cell detecting method in a cell counting method according to Embodiment 4 of the present invention;
FIGS. 8(a) to 8(b) are each an explanatory drawing showing window scan of Embodiment 4;
FIGS. 9(a) and 9(b) are each an explanatory drawing showing a cell detecting method in a cell counting method according to Embodiment 5 of the present invention;
FIGS. 10(a) and 10(b) are each an explanatory drawing showing window scan of Embodiment 5;
FIGS. 11(a) and 11(b) are each an explanatory drawing showing a cell detecting method in a conventional cell counting method;

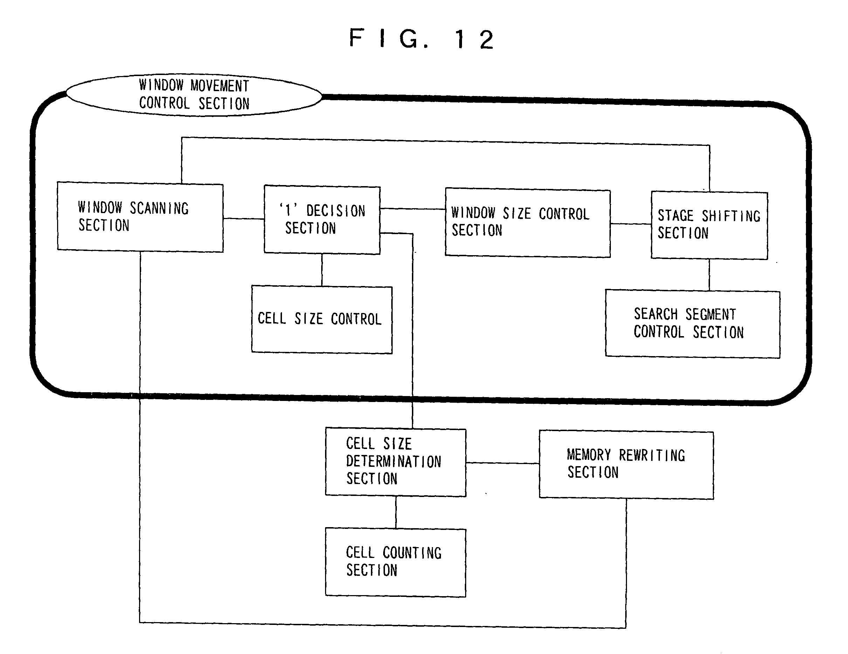

FIG. 12 is a block diagram showing an analysis apparatus according to Embodiment 6 of the present invention;
FIG. 13 is a diagram showing a cell size identification and counting method in the analysis apparatus of Embodiment 6;
FIG. 14 is a diagram showing the cell size identification and counting method in the analysis apparatus of Embodiment 6;
FIG. 15 is a diagram showing the cell size identification and counting method in the analysis apparatus of Embodiment 6;
FIG. 16 is a diagram showing a data storing method in the memory of the conventional analysis apparatus and the memory of the analysis apparatus according to Embodiment 6 of the present invention;
FIG. 17 is a diagram showing a cell size identification and counting method in the conventional analysis apparatus;
FIG. 18 is a diagram showing the cell size identification and counting method in the conventional analysis apparatus;
FIG. 19 is a diagram showing a cell size identification and counting method in an analysis apparatus according to Embodiment 7 of the present invention;
FIG. 20 is a diagram showing the cell size identification and counting method in the analysis apparatus of Embodiment 7; and
FIG. 21 is a diagram showing the cell size identification and counting method in the analysis apparatus of Embodiment 7.

### Best Mode for Carrying Out the Invention

An analysis apparatus showing an embodiment of the present invention and a cell counting method in the analysis apparatus will be specifically described below in accordance with the accompanying drawings.

### (Embodiment 1)

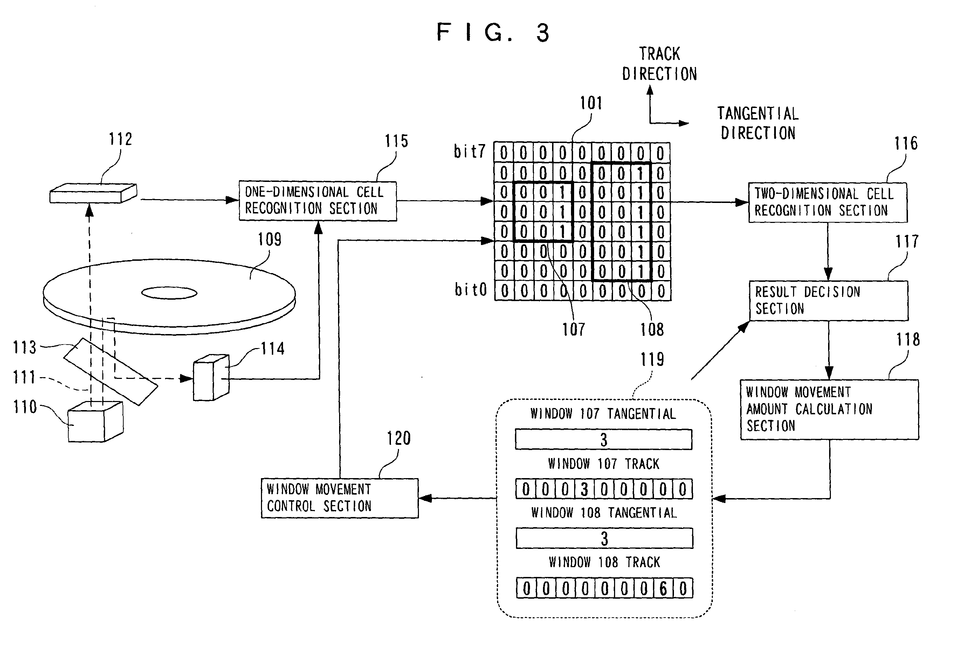

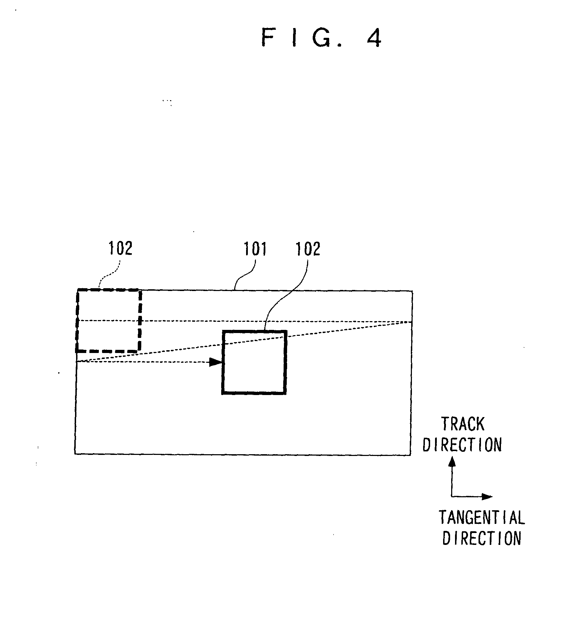

Referring to FIGS. 3 and 4, an analysis apparatus of Embodiment 1 will be first discussed below.

FIG. 3 is a block diagram showing the analysis apparatus according to Embodiment 1 of the present invention. FIG. 4 is a diagram showing the scanning procedure of a window of the present invention. InFIG. 3, reference numeral 109 denotes a translucent optical disc, reference numeral 110 denotes an optical pickup for emitting laser light to the optical disc, reference numeral 111 denotes the laser light emitted from the optical pickup 110, reference numeral 112 denotes a photodetector A for receiving the laser light 111 having passed through the disc 109 and converting the laser light to an electric signal, reference numeral 113 denotes a deflection prism, reference numeral 114 denotes a photodetector B for receiving the laser light 111 having been reflected on the optical disc 109 and converting the laser light to an electric signal, reference numeral 115 denotes a one-dimensional cell recognition section for one-dimensionally recognizing a cell based on signals from the photodetector A112 and the photodetector B114, reference numeral 116 denotes a two-dimensional cell recognition section for two-dimensionally recognizing a cell based on information from a window 107 and a window 108, reference numeral 118 denotes a window movement amount calculation section for calculating the subsequent movement amount of the window 107 and the window 108, reference numeral 119 denotes window memory for storing a window movement amount, reference numeral 117 denotes a result decision section for deciding whether the result of the two-dimensional cell recognition section 116 is correct or not based on the contents of the window memory 119, and reference numeral 120 denotes a window movement control section for controlling the movement of the window 107 and the window 108.

The following will discuss the operations and action of the analysis apparatus configured thus.

First, a specimen (not shown) is applied onto the optical disc 109. After the application of the specimen, the optical disc 109 rotates at a constant speed; meanwhile, the optical pickup 110 emits the laser light 111 to the optical disc 109. The laser light 111 partially passes through the optical disc 109 and is received by the photodetector A112. Further, the laser light 111 is partially reflected on the optical disc 109, and the reflected light is refracted on the deflection prism 113 and received by the photodetector B114. As described in Japanese Patent Laid-Open No. 2002-22651, a signal ratio of the photodetector A112 and the photodetector B114 is always constant. When a cell is present in the specimen, transmitted light is changed by the interference of the cell, thereby changing the signal ratio of the photodetector A112 and the photodetector B114. The one-dimensional cell recognition section 115 one-dimensionally decides the presence or absence of a cell based on the change in signal ratio. When it is decided that a cell is present, '1' is raised, for each cell, on a bit corresponding to each track of the disc and '0' is raised on the other bits. The '1' and '0' signals are stored in specimen memory at regular sampling intervals.

The following will discuss two-dimensional cell recognition. It is assumed that a cell 105 to be detected and a cell 106 not to be detected are present in the same specimen (FIG. 2). The cell 106 is twice as large as the cell 105.

First, for each windowmovement, the window movement amount calculation section 118 calculates a window movement amount according to a window size such that the scanning windows do not overlap each other and no area is failed to be scanned. In this case, when the size of the window 107 is three rows × three columns, the window 107 subsequently moves from the current location by 3 bits in the tangential direction or 3 bits in the track direction to prevent duplicate detection of the same cell. The amount of movement is stored in the window memory 119. To be specific, 3 is stored in the tangential part of the window memory 119. When the window subsequently moves by 1 bit in the tangential direction, 1 is subtracted from this value and the result is 2. Then, 0 is obtained when the window moves by 3 bits. On the other hand, as a movement amount in the track direction, 3 is stored on a position corresponding to the tangential position of specimen memory 101 on the window memory 119. As in the tangential part, when the window moves by 1 bit in the track direction, 1 is subtracted and the result is 2. When the window moves by 3 bits, the result is 0.

Subsequently, the specimen memory 101 is scanned by the window 107 matching with the size of the cell 105 to be detected. At this point, window scan is performed in the tangential direction and the track direction under the control of the window movement control section 120. In this case, as shown in FIG. 4, window scan is performed like scanning lines of a television as follows: scanning is first performed from one end to the other end of the specimen memory 101 in the tangential direction, and then a shift is made by 1 bit in the track direction.

The two-dimensional cell recognition section 116 always checks whether any bit of the window 107 has '1' or not during scanning of the window 107 in the tangential direction. When '1' is present, the two-dimensional cell recognition section 116 decides that a cell is present in a two-dimensional manner. Then, the result decision section 117 refers to the contents of the window memory 119. When data corresponding to the current location of the window has '0' in the window memory, that is, only when the window moves to an area not overlapping an area where a cell is recognized once, the result decision section 117 decides that the decision result of the two-dimensional cell recognition section 116 is correct. The two-dimensional cell recognition section 116 has decided that a cell is present.

The window memory may be provided in a vacant area of the specimen memory.

In this case, the capacity of the specimen memory can be saved by reversibly compressing the contents of the specimen memory and increasing the sampling intervals for storing in the specimen memory.

The above explanation described scanning in which when a movement amount is 3 bits, the contents of the window memory are confirmed while the window is shifted by 1 bit. Scanning may be performed every 3 bits.

As described above, in the present embodiment, it is possible to provide an analysis apparatus in which the movement of the window is optimally controlled by storing, in the window memory, information indicating a movement made by a distance corresponding to a window size and thus it is possible to prevent duplicate detection of the same cell and eliminate the need for recapturing data every time the window size is changed, thereby obtaining the number of desired cells with one data acquisition and conducting an accurate analysis in a short time.

### (Embodiment 2)

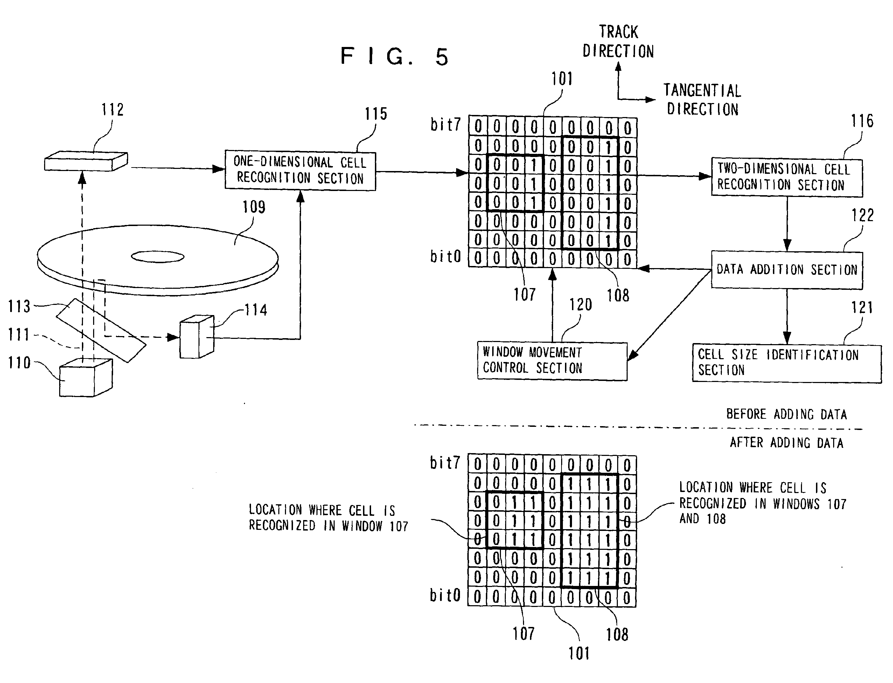

Referring to FIG. 5, an analysis apparatus of Embodiment 2 will be first discussed below.

FIG. 5 is a block diagram showing the analysis apparatus according to Embodiment 2 of the present invention. In FIG. 5, reference numeral 122 denotes a data addition section for adding data to a part where a two-dimensional cell recognition section 116 decides that a cell is present, and reference numeral 121 denotes a cell size identification section for identifying a cell size based on the data added by the data addition section 122. Embodiment 2 is different from Embodiment 1 in that the window movement amount calculation section 118 and the window memory 119 are eliminated and the data addition section 122 and the cell size identification section 121 are added.

The following will discuss the operations and action of the analysis apparatus.

First, as in Embodiment 1, a cell is recognized in a two-dimensional manner. At this point, the data addition section 122 adds, for each scanning window, data to a bit of specimen memory 101 where a cell is recognized. For example, when a cell is recognized in a window 107, data is added to the left of '1' in the window 107 to have '11'. When a cell is recognized in a window 108, data is added to the second bit from the left of '1' in the window 108 to have '101'. When cells are recognized in both of the windows 107 and 108 in this method, '111' is obtained. The window movement control section 120 confirms the presence or absence of the data, so that the movement of the window is controlled by adjusting the movement amount of the window such that the scanning windows do not overlap each other and no area is failed to be scanned.

Subsequently, the cell size identification section 121 confirms the data having been added by the data addition section 122 for each window size and identifies the size of an actual cell based on the data. For example, it is assumed that a cell having been recognized on a location by the window 108 during scanning is also recognized by the window 107. In this case, an actual cell has a size corresponding to the window 108. However, the scanning window 107 is half the size of the window 108, and thus two cells corresponding to the window 107 are recognized. Hence, it is necessary to subtract 2 from the number of counts of the two cells having been recognized in the window 107.

In Embodiment 1, the movement amount of the window is controlled to prevent duplicate scanning. In Embodiment 2, specific data is added to the specimen memory in response to detection of a cell in each window. Thus, it is possible to prevent duplicate scanning and count the number of different sized cells.

When the memory is scanned first, in the presence of even one '1' on the same tangential position of each track, '1' is stored in a cell spacing memory (not shown) and '0' is stored otherwise. Thus, a memory skip control section can perform control so as to scan only an area having a cell and it is possible to eliminate the need for two-dimensional recognition where an access is made to specimen memory information on a tangential position having no cells in the case of rescanning.

As described above, in the present embodiment, it is possible to keep a history on windows where cells are two-dimensionally recognized, thereby preventing duplicate detection of the same cell. Therefore, it is possible to eliminate the need for recapturing data every time a window size is changed, thereby providing an analysis apparatus which can obtain the number of desired cells with one data acquisition and conduct an accurate analysis in a short time.

### (Embodiment 3)

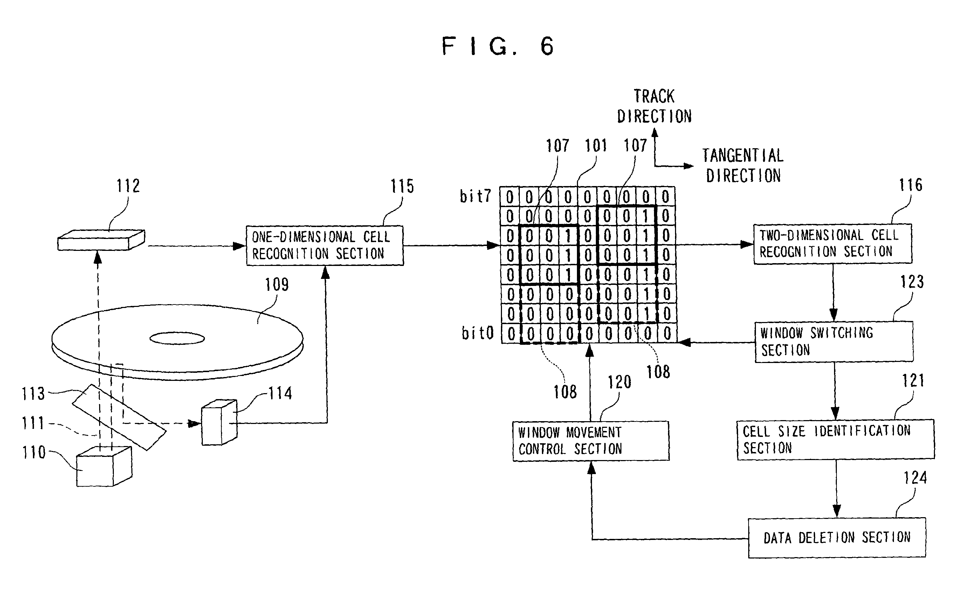

Referring to FIG. 6, an analysis apparatus of Embodiment 3 will be discussed below.

FIG. 6 is a block diagram showing the analysis apparatus according to Embodiment 3 of the present invention. In FIG. 6, reference numeral 123 denotes a window switching section for switching, during scanning, windows for scanning specimen memory 101. Embodiment 3 is different from the configuration of Embodiment 2 in that the window switching section 123 is added and the data addition section 122 is replaced with a data deletion section 124.

The following will discuss the operations and action of the analysis apparatus.

First, as in Embodiments 1 and 2, a cell is recognized in a two-dimensional manner. Then, a window 107 scans the specimen memory 101 in bits in the tangential direction. When a two-dimensional cell recognition section 116 recognizes a cell at one location, the window switching section 123 switches the window 107 to a window 108 and the two-dimensional cell recognition section 116 performs cell recognition again. At this point, when a cell is recognized both in the window 107 and the window 108, a cell size identification section 121 decides that the cell has a size corresponding to the window 108. When a cell is recognized only in the window 107, the cell size identification section 121 decides that the cell has a size corresponding to the window 107. Thereafter, as in the conventional art, all 1' detected by the data deletion section 124 in the window are rewritten to '0' to prevent duplicate detection of the same cell. In the above explanation, the window 107 is the first window to scan. The window 108 maybe the first window. In this case, contrary to the foregoing processing, the windows have to be switched successively when the two-dimensional cell recognition section 116 does not recognize any cells.

As described above, in the present embodiment, during scanning of the window, a window size is switched to perform rescanning before data in the specimen memory is rewritten, so that the number of cells detected by each of the windows can be obtained. Hence, it is possible to eliminate the need for recapturing data every time the window size is changed, thereby providing an analysis apparatus which can obtain the number of desired cells with one data acquisition and conduct an accurate analysis in a short time.

### (Embodiment 4)

A cell counting method will be discussed below according to Embodiment 4 of the present invention.

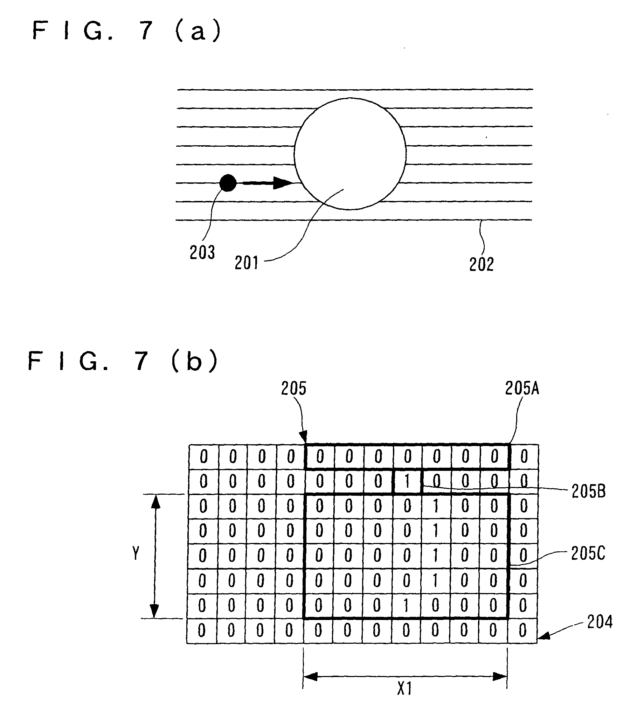

FIGS. 7 (a) and 7 (b) are each an explanatory drawing showing a cell detectingmethod in the cell countingmethod of Embodiment 4. FIG. 7 (a) is an explanatory drawing showing the positional relationship among tracks, laser light, and a cell which is a measuring object on an analysis disc in the cell counting method of Embodiment 4. FIG. 7(b) is an explanatory drawing showing a method of identifying the size of a cell by using windows and counting cells for each size according to the cell counting method of Embodiment 4.

In FIG. 7 (a) , reference numeral 201 denotes a cell which is a measuring object applied on the analysis disc, reference numeral 202 denotes tracks on the analysis disc, and reference numeral 203 denotes laser light moving relatively on the analysis disc. In the analysis apparatus of Embodiment 4, a specimen is applied to the analysis disc and the number of specific cells is analyzed out of the different-sized cells 201 in the specimen. In such an analysis apparatus, the tracks 202 are spirally formed on the analysis disc in the same manner as an optical disc such as a CD-ROM. Control is performed such that the laser light 203 moves relatively on the tracks 202 during the rotation of the analysis disc.

The cell 201 to be measured is larger than the width of the track 202 and present over the two or more tracks 202. When the laser light 203 moves on the tracks 202, a signal change occurs in a laser light receiving section depending upon whether the cell 201 is present or not on the tracks 202. By processing the signal change, as shown in FIG. 7(b), "1" is stored as a data array in memory 204 when it is decided that the cell 201 is present, and "0" is stored otherwise.

In the cell counting method of Embodiment 4, a scanning window 205 has a size basically expressed by rows × X. The rows are aligned along the X direction of the data array of the memory 204. As shown in FIG. 7(b), in the data array of the memory 204, the scanning window 205 is constituted of a first window 205A for deciding whether "0" is present over the area of the first window 205A with a size of 1 × X1 (X1 is an integer constant), a second window 205B for deciding whether "1" is included in the area of the second window 205B positioned with a size of 1×1 at the center of the X direction of the first window 205A in the subsequent row of the first window 205A, and a third window 205C for deciding whether at least one "1" is included in each row of the area of the third window 205C positioned with a size of Y × X1 (Y is an integer variable) in the subsequent row of the second window 205B.

The following method is used: the scanning window 205 is made movable in the lateral direction X and the longitudinal direction Y of the data array, scanning is started with the scanning window 205 from a sampling starting point on the upper left of the data array, the window is shifted one by one to the right, the window is moved to set a starting point on the left end of the subsequent row when reaching the end of the row, and a search is made for locations matching with conditions of each window while shifting the window one by one from the left to the right.

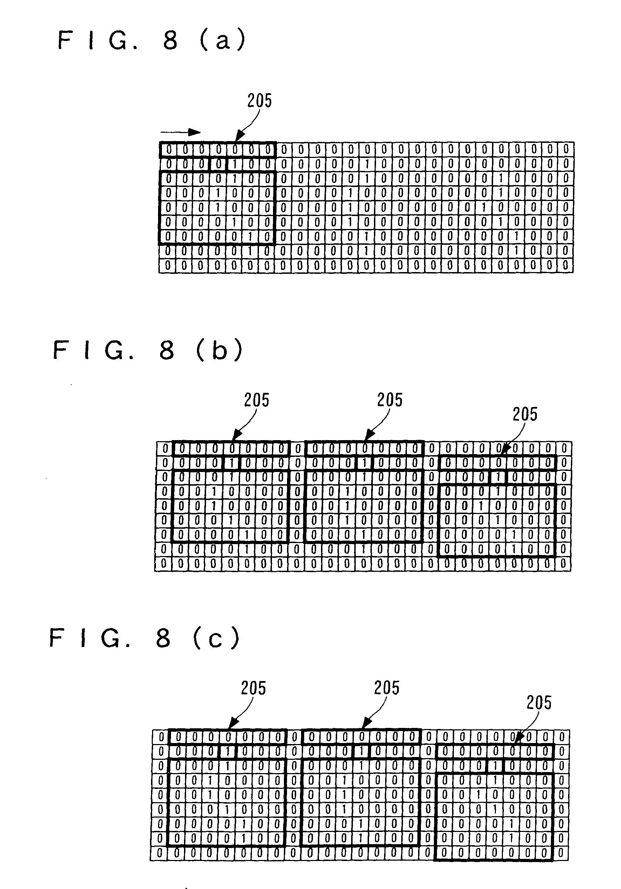

The size of the window 205C in the longitudinal direction Y varies with desired cell sizes. FIG. 8 (a) to 8 (c) each shows an example of a procedure of detecting a cell with a size of six tracks.

First, the size of the window 205C in the scanning window 205 is set at 5 × X1 (X1 = 7 in FIG. 8(a)). As shown in FIG. 8(a), the window is caused to scan to the right, the window is moved to set a starting point on the left end of the subsequent row when reaching the end of the row, and the window is shifted one by one from the left to the right to search for locations matching with the conditions.

The detection results of the scanning window 205 at the completion of all search ranges indicate the number of cells corresponding to six tracks or more. In the data array as shown in FIG. 8(b), in the case of search with the scanning window 205, three locations are detected as locations meeting conditions, which indicates the presence of three cells, each corresponding to six or more tracks.

Subsequently, the size of the window 205C is set at 6 × X1. The window is shifted one by one from the left in a similar manner to search for locations meeting conditions. Hence, the detection results of the scanning window 205 at the completion of all search ranges indicate the number of cells corresponding to seven tracks or more. In the data array as shown in FIG. 8(C), two locations are detected as locations meeting the conditions, which indicates the presence of two cells, each corresponding to seven or more tracks.

With this procedure, it is possible to obtain the number of cells present over six tracks or more and the number of cells present over seven tracks or more, so that the number of cells with a size of six tracks can be determined by a difference of the numbers. Thus, it is found that the data array of FIG. 8 has a single cell with a size of six tracks. In this case, X1 represents an integer larger than the variation range of the data array.

On positions other than detected positions shown in FIGS. 8 (b) and 8 (C), the detection conditions of the windows 205A, 205B, and 205C of the scanning window 205 are not satisfied. Thus, unlike the conventional art, it is not necessary to delete data to prevent duplicate reading of data, thereby eliminating the need for remeasurement of data.

### (Embodiment 5)

A cell counting method will be discussed below according to Embodiment 5 of the present invention.

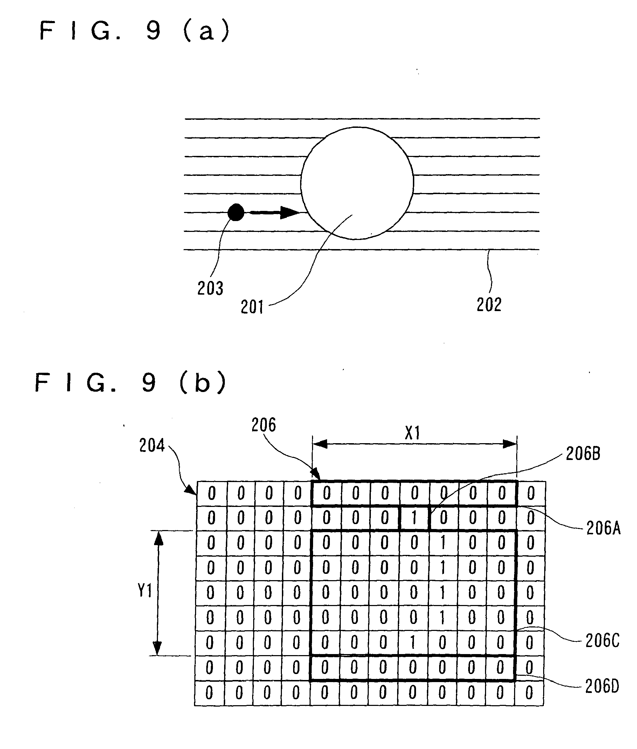

FIGS. 9 (a) and 9 (b) are each an explanatory drawing showing a cell detectingmethod in the cell counting method of Embodiment 5. FIG. 9 (a) is an explanatory drawing showing the positional relationship among tracks, laser light, and a cell which is a measuring object on an analysis disc in the cell counting method of Embodiment 5. FIG. 9(b) is an explanatory drawing showing a method of identifying the size of a cell by using windows and counting cells for each size according to the cell counting method of Embodiment 5.

In FIG. 9 (a), reference numeral 201 denotes a cell which is a measuring object applied on the analysis disc, reference numeral 202 denotes tracks on the analysis disc, and reference numeral 203 denotes laser light moving relatively on the analysis disc.

In the cell counting method of Embodiment 5, a procedure before a data array is stored in memory 204 is similar to that of Embodiment 4, and thus the explanation thereof is omitted.

In the cell counting method of Embodiment 5, a scanning window 206 has a size basically expressed by rows × X. The rows are aligned along the X direction of the data array of the memory 204. As shown in FIG. 9(b), in the data array of the memory 204, the scanning window 206 is constituted of a first window 206A for deciding whether "0" is present over the area of the first window 206A with a size of 1 × X1 (X1 is an integer constant), a second window 206B for deciding whether "1" is included in the area of the second window 206B positioned with a size of 1 × 1 at the center of the X direction of the first window 206A in the subsequent row of the first window 206A, a third window 206C for deciding whether at least one "1" is included in each row of the area of the third window 206C positioned with a size of Y1 × X1 (Y1 is an integer variable) in the subsequent row of the second window 206B, and a fourth window 206D for deciding whether "0" is present over the area of the fourth window 206D positioned with a size of 1 × X1 (X1 is an integer variable) in the subsequent row of the third window 206C.

The following method is used: the scanning window 206 is made movable in the lateral direction X and the longitudinal direction Y of the data array, scanning is started with the scanning window 206 from a sampling starting point on the upper left of the data array, the window is shifted one by one to the right, the window is moved to set a starting point on the left end of the subsequent row when reaching the end of the row, and a search is made for locations matching with conditions of each window while shifting the window one by one from the left to the right.

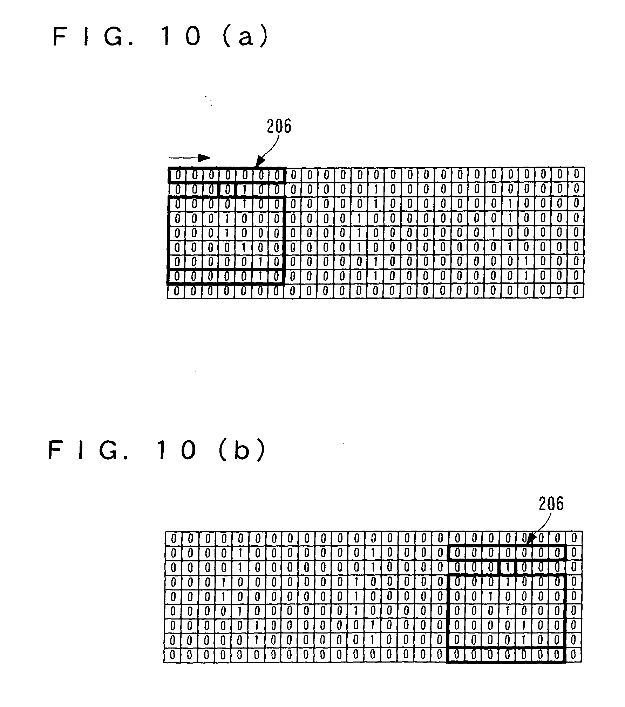

The size of the window 206C in the longitudinal direction Y varies with desired cell sizes. FIGS. 10 (a) and 10 (b) each shows an example of a procedure of detecting a cell with a size of six tracks.

First, the size of the window 206C in the scanning window 206 is set at 5 × X1 (X1 = 7 in FIG. 10 (a)) . As shown in FIG. 10 (a), the scanning window 206 is caused to scan from the upper left to the right of the data array, the window is moved to set a starting point on the left end of the subsequent row, when reaching the end of the row, and the window is shifted one by one from the left to the right to search for locations matching with the conditions.

The detection results of the scanning window 206 at the completion of all search ranges indicate the number of cells corresponding to six tracks or more. In the data array as shown in FIG. 10 (b), in the case of searching with the scanning window 206, one location is detected in the scanning window 206 as a point meeting the conditions, which indicates the presence of one cell corresponding to six or more tracks.

On positions other than detected positions shown in FIG. 10(b), the detection conditions of the scanning window 206 are not satisfied. Thus, it is not necessary to delete data to prevent duplicate reading of data, eliminating the need for remeasurement of data.

Consequently, it is not necessary to remeasure a cell on tracks two or more times to confirm the presence of the cell, thereby accurately identifying a cell size and counting cells in a short time.

### (Embodiment 6)

A cell counting method will be discussed below according to Embodiment 6 of the present invention.

A method of storing data in a memory area 313 of FIG. 16 is the same as a conventional method.

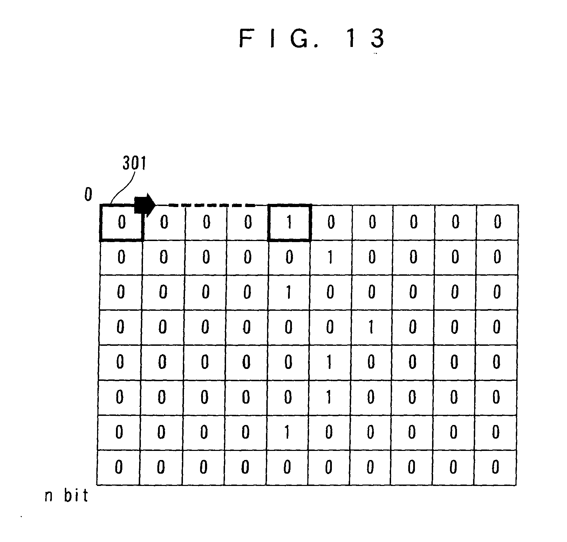

As shown in FIG. 13, the size of a window movable in the memory area is first set at 1 × 1 and the window 301 is caused to scan in the memory area (window scanning section). In the scanning method of the window in the window scanning section, scanning is started from the first row of the first column in the memory area and the window is sequentially shifted in the address direction. At the completion of scanning on all areas in the address direction, the window is shifted by one stage in the bit direction and scanning is sequentially performed from the first column. Scanning is performed while a "1" decision section decides the presence or absence of "1". When the data of a passage area is "0", the window passes as it is. When "1" is found, the window is stopped. In this case, a cell size counter is provided to increment a counter every time "1" is found.

Relative to the found "1", a segment for searching for subsequent "1" is shifted by one stage in the bit direction (stage shifting section). In this case, a size expanded in the address direction is determined based on a desired cell size, and the obtained size is used as a search segment of the subsequent bit (search segment control section). Further, the size of the search segment expanded in the address direction is fixed within a range of ±m samples (a value m is determined by the desired cell size) in the address direction relative to the first "1". However, when the value m is set too large, another close cell may be recognized as the same cell. Thus, it is necessary to set the value m suitably for a target cell size.

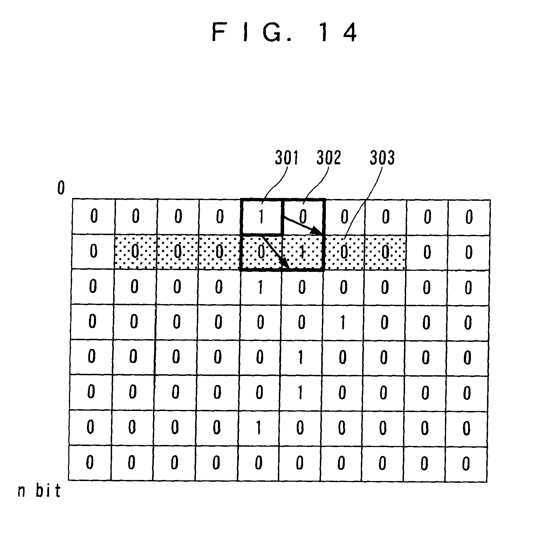

A search segment 303 determined thus is scanned by the window scanning section, and the "1" decision section searches for another "1". When "1" is found, the window is expanded (302) to the found "1" by a window size control section (FIG. 14), and the "1" decision section searches for still another "1" in the search segment of the subsequent bit of the window.

These operations are repeated and the expansion of the window is ended when the search segment of the subsequent bit has no "1". The above explanation described functions in a window movement control section.

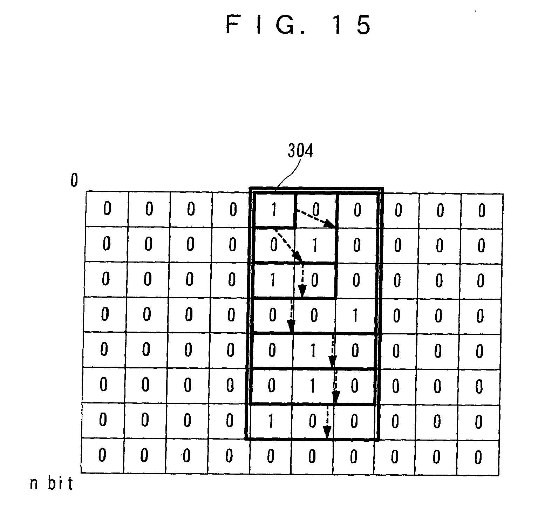

A cell size is determined according to the value of the cell size counter at that time (cell size determination section) . A cell count section counts the cell when the cell has a target size (FIG. 15). After counting, "1" in a window 304 are all rewritten into "0" by a memory rewriting section, and a search is made for "1" again with the 1 × 1 window 301. For some purposes, the memory rewriting section can rewrite only "1" of cell data of a specific size into "0" or leave "1" as they are.

By repeating these operations, window scan is completed in the memory area and the number of target cells is counted.

In Embodiment 6, it is possible to determine the size of a cell at the recognition of the cell, thereby counting cells for each size or counting only cells of a desired size.

### (Embodiment 7)

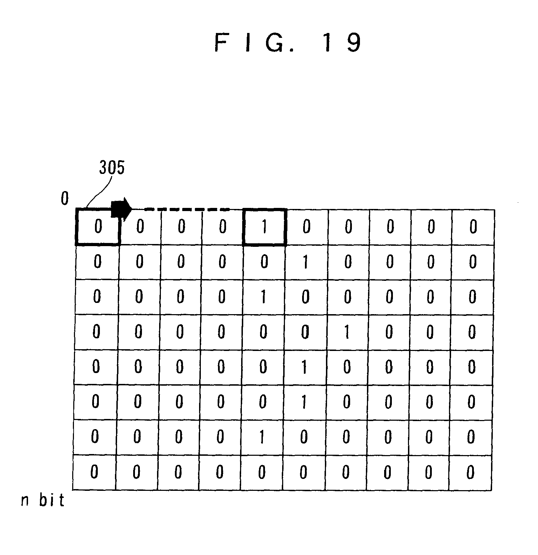

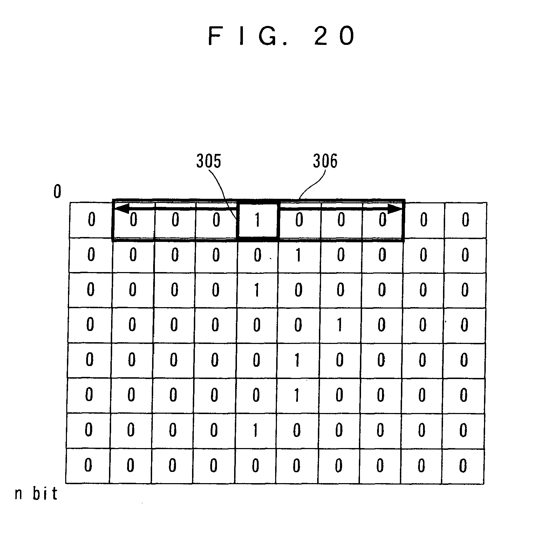

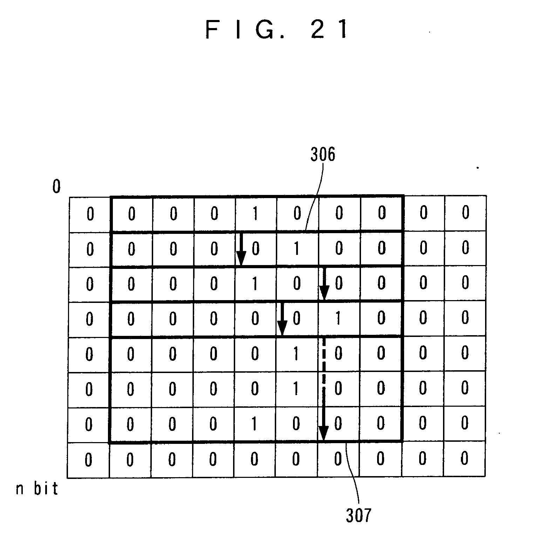

Referring to FIGS. 19 to 21, a cell counting method will be discussed below according to Embodiment 7 of the present invention.

A method of storing data in a memory area 313 of FIG. 16 is the same as a conventional method.

As shown in FIG. 19, a window movable in the memory area is first set at 1 × 1 and the window 305 is caused to scan in the memory area. In the scanning method of the window in a window scanning section, scanning is started from the first row of the first column in the memory area and the window is sequentially shifted in the address direction. At the completion of scanning on all areas in the address direction, the window is shifted by one stage in the bit direction and scanning is sequentially performed from the first column. Scanning is performed while a "1" decision section decides the presence or absence of "1". When the data of a passage area is "0", the window passes as it is. When "1" is found, the window is stopped. In this case, a cell size counter is provided to increment a counter every time "1" is found.

Relative to the found "1", a size expanded in the address direction is determined based on a desired cell size. The window 305 is expanded according to the determined size to a bit direction search window 306. Further, the size of the search segment expanded in the address direction is fixed within a range of ±m samples (a value m is determined by the desired cell size) in the address direction relative to the first '1'. However, when the value m is set too large, another close cell may be recognized as the same cell. Thus, it is necessary to set the value m suitably for a target cell size.

The segment for searching for subsequent "1" is shifted by one stage in the bit direction. When the shifted window has '1' , the window 306 is shifted by one stage to the subsequent bit and the foregoing operations are continued.

When the window has no '1', the shift of the window 306 in the bit direction is ended and parts passed by the window 306 are combined into a window 307. That is, each bit of the window 307 includes one '1'.

A cell size is determined according to the bit size of the window 307. A cell count section counts the cell when the cell has a target size. After counting, '1' in the window 307 are all rewritten into "0" by a memory rewriting section, and a search is made for "1" again with the 1 × 1 window 305. For some purposes, the memory rewriting section can rewrite only '1' of cell data of a specific size into '0' or leave '1' as they are.

By repeating these operations, window scan is completed in the memory area and the number of target cells is counted.

In the present embodiment, it is possible to determine the size of a cell at the recognition of the cell, thereby counting cells for each size or counting only cells of a desired size.

## Claims

1. An analysis apparatus, in which a specimen containing cells is applied onto a disc, light is emitted to the disc, and the number of cells is determined based on reflected or transmitted light, the analysis apparatus comprising:
a one-dimensional cell recognition section for one-dimensionally recognizing the cell based on a change of the reflected or transmitted light,
a specimen memory for storing first data in a bit corresponding to each track of the disc based on a recognition result of the one-dimensional cell recognition section, the first data indicating presence or absence of the cell,
a two-dimensional cell recognition section for two-dimensionally recognizing the cell by scanning the specimen memory with a window having a given size to confirm the first data,
a data addition section for adding second data to the specimen memory for each window, the second data indicating presence or absence of the cell in the two-dimensional cell recognition,
a cell size identification section for identifying a cell size by using the second data, and
a window movement control section for controlling movement of the window,
wherein the second data indicating the presence or absence of the cell for each window is added to the specimen memory, so that a cell size and the number of cells are obtained with one data acquisition.

2. An analysis apparatus, in which a specimen containing cells is applied onto a disc, light is emitted to the disc, and the number of cells is determined based on reflected or transmitted light, the analysis apparatus comprising:
a one-dimensional cell recognition section for one-dimensionally recognizing the cell based on a change of the reflected or transmitted light,
a specimen memory for storing first data in a bit corresponding to each track of the disc based on a recognition result of the one-dimensional cell recognition section, the first data indicating presence or absence of the cell,
a two-dimensional cell recognition section for two-dimensionally recognizing the cell by scanning the specimen memory with a window having a given size to confirm the first data,
a window switching section for arbitrarily switching a size of the window during scanning of the specimen memory,
a cell size identification section for identifying a cell size recognized from a scanning result obtained with one or more window sizes in the two-dimensional cell recognition section, and
a data deletion section for deleting the first data after identification in the cell size identification,
wherein when a cell is confirmed during scanning of the specimen memory, a cell size is identified by changing the window size and performing rescanning, so that a cell size and the number of cells are obtained with one data acquisition.

3. The analysis apparatus according to claim 1 or 2, wherein a sampling period can be changed with the size of the cell in the specimen.

4. The analysis apparatus according to claim 1, further comprising a cell spacing memory for storing a spacing between the cells during scanning of the specimen memory with the window, and a memory skip control section for scanning only an area having the cell based on information from the cell spacing memory when the window size is switched to rescan the specimen memory.

5. A cell counting method in an analysis apparatus, the method comprising:
reading a data array in an area of a scanning window from memory for storing the data array having binary data of "0" or "1" surface-aligned along a lateral direction X and a longitudinal direction Y, the binary data being obtained based on presence or absence of cells applied with two or more sizes on an analysis disc, the scanning window movable in the lateral direction X and the longitudinal direction Y and having a size expressed by rows × X, the rows being aligned along the X direction of the data array,
performing an operation based on the data to decide the presence or absence of the cells,
identifying cell sizes, and
counting the number of the cells for each of the cell sizes,
wherein the scanning window is constituted of a first window for deciding whether "0" is present over an area of the first window with a size of 1 × X1 (X1 is an integer constant), a second window for deciding whether "1" is included in an area of the second window positioned with a size of 1 × 1 at a center of the X direction of the first window in a subsequent row of the first window, and a third window for deciding whether at least one "1" is included in each row of an area of the third window positioned with a size of Y × X1 (Y is an integer variable) in a subsequent row of the second window, and the cell sizes are identified using the scanning window.

6. The cell counting method in the analysis apparatus according to claim 5, wherein X1 is larger than a range of displacement caused by variations in a sampling starting point.

7. The cell counting method in the analysis apparatus according to claim 5 or 6, wherein the size of the cell to be detected is set at Y2 to Y3 (Y2 and Y3 are integers, Y2 < Y3), reading of the data array in the area of the scanning window is started with the scanning window where Y = Y2 - 1 is established, Y is changed, when there is a match with a condition of the scanning window, successively to Y2, Y2 +1, ... on a position where there is the match, and it is decided whether there is a match with the range condition of Y whereby the data array in the area is read until there is no match or Y = Y3 is obtained.

8. The cell counting method in the analysis apparatus according to any one of claims 5 to 7, wherein presence or absence of the cell is decided according to a change in light quantity when laser light is emitted to a track on the analysis disc where the cell is applied and when the laser light is received by a photodetector.

9. A cell counting method in an analysis apparatus, the method comprising:
reading a data array in an area of a scanning window from memory for storing the data array having binary data of "0" or "1" surface-aligned along a lateral direction X and a longitudinal direction Y, the binary data being obtained based on presence or absence of cells applied with two or more sizes on an analysis disc, the scanning window movable in the lateral direction X and the longitudinal direction Y and having a size expressed by rows × X, the rows being aligned along the X direction of the data array,
deciding the presence or absence of the cells based on the data,
identifying the sizes of the cells, and
counting the number of the cells for each cell size,
wherein the scanning window is constituted of a first window for deciding whether "0" is present over an area of the first window with a size of 1 × X1 (X1 is an integer constant), a second window for deciding whether "1" is included in an area of the second window positioned with a size of 1 × 1 at a center of the X direction of the first window in a subsequent row of the first window, a third window for deciding whether at least one "1" is included in each row of an area of the third window positioned with a size of Y1 × X1 (Y1 is an integer variable) in a subsequent row of the second window, and a fourth window for deciding whether "0" is present over an area of the fourth window positioned with a size of 1 × X1 (X1 is an integer variable) in a subsequent row of the third window, and the cell sizes are identified using the scanning window.

10. The cell counting method in the analysis apparatus according to claim 9, wherein X1 is larger than a range of displacement caused by variations in a sampling starting point.

11. The cell counting method in the analysis apparatus according to claim 9 or 10, wherein the presence or absence of the cell is decided according to a change in light quantity when laser light is emitted to tracks on the analysis disc where the cell is applied and when the laser light is received by a photodetector.

12. An analysis apparatus, in which detection light is emitted to an analysis disc where cells are applied, and the cells are counted based on data received by a photodetector, the analysis apparatus comprising:
a memory for storing binary cell information for each bit of a data bus, the cell information being obtained for each track on the analysis disc,
a window movable in an area of the memory,
a window movement control section for controlling a movement of the window,
a cell size determination section for recognizing the cell from an array of "1" in the window and determining a cell size,
a cell counting section for incrementing a counter after recognition of the cell, and
a memory rewriting section for rewriting "1" to "0" after the recognition of the cell.

13. The analysis apparatus according to claim 12, wherein the window movement control section comprises a window scanning section for causing a window with a size of 1 × 1 to scan in an address direction, a "1" decision section for deciding presence or absence of "1" during scanning of the window, a cell size counter for incrementing a count every time the decision section detects "1", a window control section for expanding the window to "1" detected by the decision section, a stage shifting section for shifting a scanning segment of "1" in a bit direction every time the decision section detects "1", and a search segment control section for limiting a range where the window is caused to scan in the shifted scanning segment.

14. The analysis apparatus according to claim 12 or 13, wherein a size expanded in the address direction is determined based on a desired cell size and the obtained size is used as a search segment of a subsequent bit.

15. A cell counting method in an analysis apparatus, in which detection light is emitted to an analysis disc where cells are applied, and the cells are counted based on data received by a photodetector, the method comprising:
step 1 of causing a window with a size of 1 × 1 to scan in an address direction and detecting "1" in a memory area,
step 2 of expanding the window to 1 × X6 (X6 is an integer constant) relative to the detected "1",
step 3 of disposing the window of 1 × X6 in a subsequent stage and expanding, when the window has "1", the window to the subsequent stage,
step 4 of repeating processing of step 2 and step 3 until no "1" is detected in the window,
step 5 of ending expansion of the window when no "1" is detected in the window, and making a count when the window has a size of a predetermined value in a Y direction, and
step 6 of rewriting all "1" to "0" and repeating processing from step 1.
